# EUROPÄISCHE PATENTSCHRIFT

(11) **EP 1 668 233 B1**
(45) Veröffentlichungstag und Bekanntmachung des Hinweises auf die Patenterteilung: **02.04.2008**
(21) Anmeldenummer: 04787183.5
(22) Anmeldetag: 21.09.2004
(51) Int. Cl.: F02B 29/08, F02M 35/112

(54) **LUFTANSAUGMODUL FÜR EINE BRENNKRAFTMASCHINE MIT IMPULSAUFLADUNG**
AIR INDUCTION MODULE FOR A COMBUSTION ENGINE HAVING PULSE CHARGING
MODULE D'ASPIRATION D'AIR POUR MOTEUR A COMBUSTION INTERNE A SURALIMENTATION PAR IMPULSIONS

(30) Priorität: 02.10.2003 DE 10346005
(43) Veröffentlichungstag der Anmeldung: 14.06.2006
(73) Patentinhaber: SIEMENS AKTIENGESELLSCHAFT, 80333 München (DE)
(72) Erfinder: DEISS, Siegfried, 93099 Mötzing (DE); HEINZLMEIR, Manfred, 85084 Agelsberg (DE); MANN, Thomas, 61130 Nidderau-Windecken (DE); ZENTGRAF, Matthias, 81541 München (DE)
(74) Vertreter: Bongen, Renaud & Partner
(86) Internationale Anmeldenummer: PCT/EP2004/052260
(87) Internationale Veröffentlichungsnummer: WO 2005/031133

(56) Entgegenhaltungen:
- EP-A- 0 527 683
- EP-A- 1 236 875
- DE-A- 10 137 828
- US-A1- 2003 094 156
- US-B1- 6 408 811
- PATENT ABSTRACTS OF JAPAN Bd. 0072, Nr. 87 (M-264), 21. Dezember 1983 (1983-12-21) & JP 58 160512 A (HONDA GIKEN KOGYO KK), 24. September 1983 (1983-09-24)

## Beschreibung

Die vorliegende Erfindung betrifft ein Luftansaugmodul für eine Brennkraftmaschine mit Impulsaufladung.

Bei der Impulsaufladung (dynamischen Aufladung) werden im Saugrohr der Brennkraftmaschine angeordnete Impulsladungsventile (Taktventile) dazu verwendet, die Luftmasse im Brennraum durch das ein- oder mehrmalige Öffnen und Schließen des Impulsaufladungsventils während der Öffnungsphase des Einlassventils zu erhöhen, verwiesen sei beispielsweise auf "Handbuch Verbrennungsmotor", 2. Aufl., S. 386, Abschn. 10.5.3. Die Impulsaufladung ist sowohl bei Otto- wie auch DieselBrennkraftmaschinen einsetzbar.

Die vorliegende Anmeldung befasst sich insbesondere mit der Integration derartiger Impulsladungsventile im Saugrohr der Brennkraftmaschine die Offenbarung JP-A-58 160 512 zeigt ein Beispiel solch einer Integration im Saugrohr einer Brennkraftmaschine. Hierbei sind unter anderem die folgenden Überlegungen zu berücksichtigen:

Die Impulsladungsventile mit ihren Aktuatoren sollten quasifest mit dem Gehäuse der Brennkraftmaschine verbunden sein. Die elektrische Verlustleistung der Aktuatoren sollte über die durch das Luftansaugmodul strömende Luft abgeführt werden. Außerdem sollte das zur Ansteuerung der Aktuatoren erforderliche elektronische Steuergerät einschließlich der elektrischen Kontaktierung der Aktuatoren in das Luftansaugmodul integriert werden, wobei die thermische und mechanische Anbindung des elektronischen Steuergerätes an der Brennkraftmaschine beachtet und die Abfuhr der elektrischen Verlustleistung der Elektronik in Form von Wärme unter allen Betriebspunkten sichergestellt werden sollten.

Die durch die vorliegende Erfindung gelöste Aufgabe besteht somit darin, ein Luftansaugmodul für eine Brennkraftmaschine mit Impulsaufladung zu schaffen, bei dem die Impulsladungsventile mit ihren Aktuatoren möglichst optimal im Hinblick auf Platzbedarf, konstruktiven Aufwand, Schwingbelastung, Wärmeabfuhr und weitere Betriebseigenschaften in das Saugrohr integriert sind.

Diese Aufgabe wird durch das in Anspruch 1 definierte Luftansaugmodul gelöst.

Bei dem erfindungsgemäß ausgebildeten Luftansaugmodul besteht das Saugrohr aus zwei getrennten Saugrohrkörpern, die durch eine Flanschverbindung so miteinander verbunden sind, dass in ihnen vorgesehene Saugrohrabschnitte sich zu den Einzelsaugrohren des Saugrohres ergänzen. Der erste Saugrohrkörper enthält einen Luftsammler und die davon wegführenden einzelnen Saugrohrabschnitte. Der zweite Saugrohrkörper mit seinen Saugrohrabschnitten ist am Zylinderkopf der Brennkraftmaschine befestigbar.

Aufgrund dieser Zweiteilung des Saugrohres kann in den Saugrohrabschnitten des zweiten Saugrohrkörpers jeweils ein Impulsladungsventil mit zugehörigem Aktuator angeordnet werden. Grundsätzlich können die Impulsladungsventile von beliebiger Bauart sein. Vorzugsweise bestehen sie jedoch aus Tellerventilen, deren Aktuatoren von Elektromagneten gebildet werden.

Die Erfindung ermöglicht somit eine konstruktiv einfache und platzsparende Integration der Impulsladungsventile im Saugrohr. Auch im Hinblick auf die Schwingbelastung stellt die Erfindung eine optimale Lösung dar. Besonders vorteilhaft ist, dass aufgrund der Integration der Impulsladungsventile mit ihren Aktuatoren in den Saugrohrabschnitten des zweiten Saugrohrkörpers die Aktuatoren von der durch das Saugrohr strömenden Luft umgeben werden, wodurch eine Kühlung der Aktuatoren und damit die Abfuhr der elektrischen Verlustleistung der Aktuatoren sichergestellt werden.

Das erfindungsgemäß ausgebildete Luftansaugmodul ist daher ohne weiteres für eine Großserienproduktion geeignet.

Sowohl der erste wie auch der zweite Saugrohrkörper können aus einem metallischen Werkstoff wie z.B. einer Aluminiumlegierung oder auch aus einem Kunststoff wie z.B. Polyamid hergestellt sein.

Das elektronische Steuergerät zum Ansteuern der Aktuatoren der Impulsladungsventile kann am Luftfiltergehäuse der Brennkraftmaschine so befestigt werden, dass es von der durch das Luftansaugmodul strömenden Luft gekühlt wird. Statt dessen kann das elektronische Steuergerät jedoch auch am ersten oder zweiten Saugrohrkörper so befestigt werden, dass es von der durch den ersten bzw. zweiten Saugrohrkörper strömenden Luft gekühlt wird.

In weiterer Ausgestaltung der Erfindung ist vorgesehen, dass ein elektronisches Anschlussteil (Leadframe) zur Leitungsverbindung zwischen den Aktuatoren der Impulsladungsventile und dem elektronischen Steuergerät in den zweiten Saugrohrkörper integriert wird. Besteht der zweite Saugrohrkörper aus Kunststoff, so wird das elektronische Anschlussteil vorzugsweise von dem Kunststoff des zweiten Saugrohrkörpers umgossen, und es ist dann durch eine Steckverbindung mit den Aktuatoren der Impulsladungsventile elektrisch verbindbar. Durch diese integrierte elektronische Kontaktierung ergibt sich eine weitere Verringerung der Herstellungskosten und eine Erhöhung der Betriebssicherheit. Außerdem wird bauartbedingt eine falsche Kontaktierung (Verwechslung der Zylinder) vermieden.

Weitere vorteilhafte Ausgestaltungen der Erfindung ergeben sich aus den Unteransprüchen.

Anhand der Zeichnungen wird ein Ausführungsbeispiel der Erfindung näher erläutert. Er zeigt:
Fig. 1 eine perspektivische Explosionsdarstellung eines Luftansaugmoduls;
Fig. 2 eine der Fig. 1 entsprechende perspektivische Darstellung des Luftansaugmoduls im montierten Zustand;
Fig. 3 eine teilweise aufgeschnittene perspektivische Ansicht des Luftansaugmoduls aus anderer Blickrichtung.

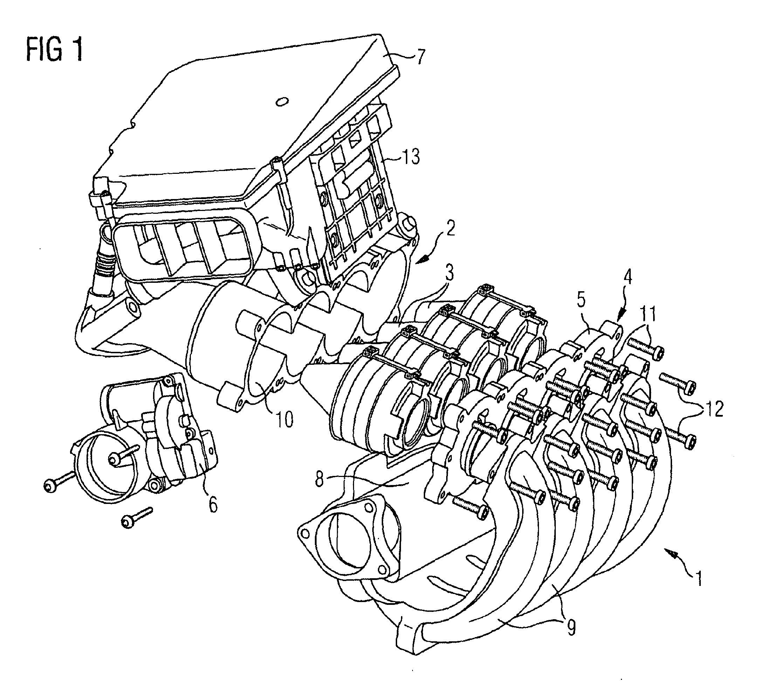

Das in den Figuren 1 bis 3 dargestellte Luftansaugmodul dient als Luftansaugsystem einer (nicht dargestellten) Brennkraftmaschine, die als Otto- oder Diesel-Brennkraftmaschine ausgebildet sein kann und im dargestellten Ausführungsbeispiel eine Vier-Zylinder-Brennkraftmaschine ist.

Wie insbesondere in der Explosionsdarstellung der Fig. 1 zu sehen ist, weist das Luftansaugmodul ein Saugrohr auf, das in einen ersten Saugrohrkörper 1 und einen zweiten Saugrohrkörper 2 aufgeteilt ist. Ferner umfasst das Luftansaugmodul Impulsladungsventile 3 mit zugehörigen Aktuatoren, die in den zweiten Saugrohrkörper 2 eingesetzt werden, wie noch genauer erläutert wird. Die beiden Saugrohrkörper 1 und 2 sind durch eine Flanschverbindung 4 mit einer Zwischenplatte 5 miteinander verbindbar, wie ebenfalls noch genauer erläutert wird.

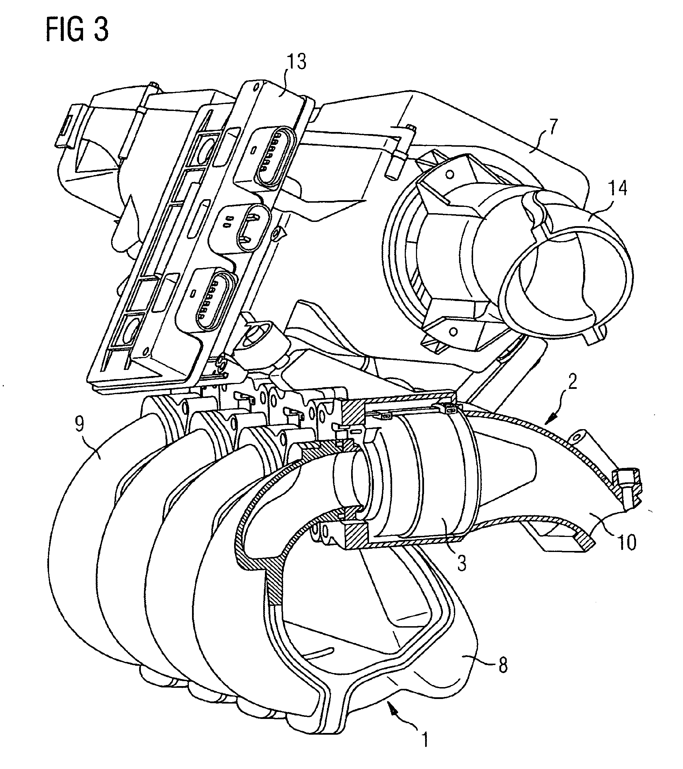

Zu dem Luftansaugmodul gehört ferner eine Drosselklappe 6 und ein Luftfiltergehäuse 7, das mit der Drosselklappe 6 über eine Reinluftleitung 14 verbindbar ist, die lediglich in Fig. 3 bruchstückhaft angedeutet ist.

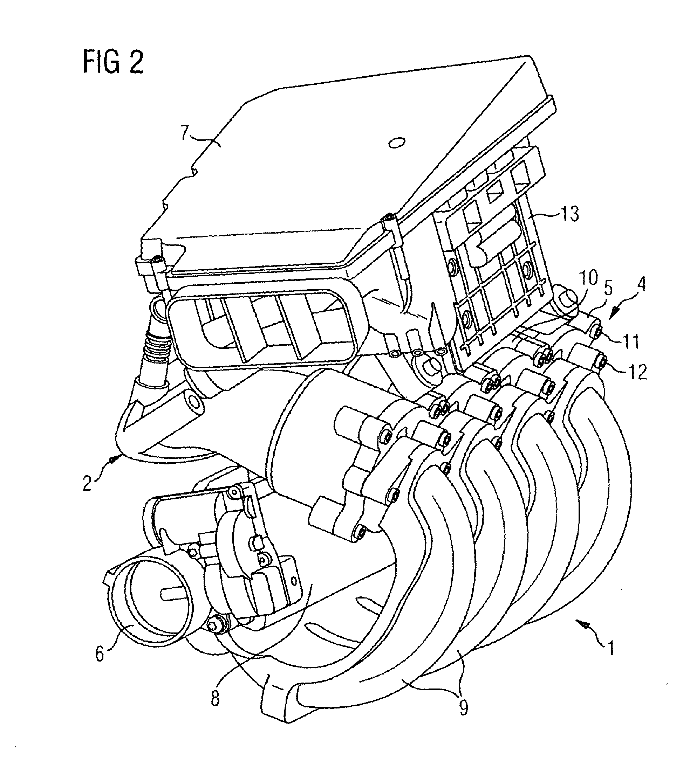

Der erste Saugrohrkörper 1 umfasst einen Luftsammler 8, der auf der in den Figuren 1 und 2 zu sehenden Seite einen Lufteinlass mit der darin angeordneten Drosselklappe 6 hat. An den Luftsammler 8 schließen sich (entsprechend der Zylinderzahl vier) gekrümmte Saugrohrabschnitte 9 an, welche in einem gemeinsamen Flanschabschnitt enden.

Der zweite Saugrohrkörper 2 ist ebenfalls mit vier Saugrohrabschnitten 10 versehen, die im montierten Zustand des Luftansaugmoduls (siehe Figuren 2 und 3) die Saugrohrabschnitte 9 des ersten Saugrohrkörpers 1 weiterführen. Die Saugrohrabschnitte 9 und 10 bilden somit die Einzelsaugrohre des Saugrohres.

Die in den Figuren 1 und 3 sichtbaren Impulsladungsventile 3 sind im dargestellten Ausführungsbeispiel Tellerventile mit Aktuatoren in Form von Elektromagneten mit jeweils zwei elektromagnetischen Spulen. Jedes der Tellerventile mit dem zugehörigen Aktuator bildet eine Baueinheit, die als solche in jeweils einen Saugrohrabschnitt 10 des zweiten Saugrohrkörpers 2 einsteckbar ist. Die Impulsladungsventile 3 mit ihren Aktuatoren werden in den Saugrohrabschnitten 10 des zweiten Saugrohrkörpers 2 durch die Zwischenplatte 5 gehalten, welche durch Schraubverbindungen 11 mit dem zweiten Saugrohrkörper 2 verbunden werden.

Auf diese Weise sind die Impulsladungsventile 3 mit ihren Aktuatoren auf einfache Weise in das Saugrohr einsetzbar. Diese Anordnung ist ferner hinsichtlich Platzbedarf und Schwingverhalten besonders vorteilhaft. Außerdem ist die Anordnung so getroffen, dass die durch das Saugrohr strömende Luft um die Aktuatoren geführt ist, wodurch die Aktuatoren gekühlt werden und somit ihre elektrische Verlustleistung in effektiver Weise abgeführt wird.

An der Zwischenplatte 5 ist durch Schraubverbindungen 12 der erste Saugrohrkörper 1 befestigt. Die Zwischenplatten 5 ist mit Durchgangslöchern versehen, die für einen glatten Strömungsübergang zwischen den Saugrohrabschnitten 9 und den Saugrohrabschnitten 10 der beiden Saugrohrkörper 1, 2 sorgen.

Die Saugrohrkörper 1 und 2 können aus einem metallischen Werkstoff wie z.B. einer Aluminiumlegierung bestehen. Vorteilhafterweise bestehen sie jedoch aus einem Kunststoff wie z.B. Polyamid mit den sich daraus ergebenden Vorteilen.

Zum Ansteuern der Aktuatoren der Impulsladungsventile 3 ist ein elektronisches Steuergerät 13 vorgesehen, das im dargestellten Ausführungsbeispiel am Luftfiltergehäuse 7 angebracht ist. Zu diesem Zweck besitzt das Luftfiltergehäuse eine Öffnung, über der das elektronische Steuergerät 13 sitzt. Auf diese Weise wird durch das Luftfiltergehäuse 7 strömende Luft an der Rückseite des elektronischen Steuergerätes 13 vorbeigeführt, wodurch das elektronische Steuergerät 13 gekühlt und seine elektrische Verlustleistung abgeführt wird.

Statt der in den Figuren 1 bis 3 gezeigten Anordnung könnte das elektronische Steuergerät 13 je nach den speziellen Bauraumverhältnissen auch am ersten Saugrohrkörper 1 oder am zweiten Saugrohrkörper 2 so angebracht werden, dass es von der vorbeiströmenden Luft gekühlt wird.

Zur elektrischen Kontaktierung der Aktuatoren der Impulsladungsventile 3 ist ein - nicht dargestelltes - elektrisches Anschlussteil (Leadframe) vorgesehen, das aus einem Kupferteil mit elektrischen Leiterbahnen und angespritzten Steckerstiften besteht. Dieses Anschlussteil stellt die elektrische Leitungsverbindung zwischen den Aktuatoren der Impulsladungsventile 3 und dem elektronischen Steuergerät 13 dar.

Das elektrische Anschlussteil wird zweckmäßigerweise in den zweiten Saugrohrkörper 10 integriert. Ist der zweite Saugrohrkörper 2 als Spritzgussteil aus Kunststoff ausgebildet, so wird das elektrische Anschlussteil in das Kunststoffspritzwerkzeug für den zweiten Saugrohrkörper 2 eingelegt und während des Spritzvorganges mit dem heißen Kunststoff so umspritzt, dass lediglich die Steckerstifte aus dem Kunststoff vorstehen. Die Anordnung ist hierbei so getroffen, dass beim Einsetzen der Impulsladungsventile 3 mit ihren Aktuatoren in die Saugrohrabschnitte 10 des zweiten Saugrohrkörpers 2 selbsttätig ein elektrischer Kontakt zwischen den Steckerstiften des Anschlussteils und an den Aktuatoren vorgesehen Steckeraufnahmen hergestellt wird.

Auf diese Weise ist somit die elektrische Kontaktierung der Aktuatoren der Impulsladungsventile 3 auf optimale Weise in das Saugrohr integriert, was die Fertigung und Montage vereinfacht, die Betriebssicherheit erhöht und insbesondere eine falsche Kontaktierung (d.h. eine Verwechslung der Zylinder) vermeidet.

## Patentansprüche

1. Luftansaugmodul für eine Brennkraftmaschine mit Impulsaufladung,
- mit einem Saugrohr mit Einzelsaugrohren entsprechend der Anzahl der Zylinder der Brennkraftmaschine, welches Saugrohr aufweist:
- einen ersten Saugrohrkörper (1) mit einem Luftsammler (8) und einzelnen Saugrohrabschnitten (9), und
- einen zweiten Saugrohrkörper (2) mit einzelnen Saugrohrabschnitten (10), welcher am Zylinderkopf der Brennkraftmaschine befestigbar ist,
- wobei der erste und zweite Saugrohrkörper (1, 2) durch eine Flanschverbindung (4) so miteinander verbunden sind, dass sich ihre Saugrohrabschnitte (9, 10) zu den Einzelsaugrohren des Saugrohres ergänzen,
- in den Saugrohrabschnitten (10) des zweiten Saugrohrkörpers (2) jeweils ein Impulsladungsventil (3) mit zugehörigem Aktuator angeordnet ist, und
- die Flanschverbindung (4) zwischen den beiden Saugrohrkörpern (1, 2) eine Zwischenplatte (5) mit Durchgangslöchern entsprechend den Einzelsaugrohren aufweist, welche durch Schraubverbindungen (11) am zweiten Saugrohrkörper (2) so befestigbar ist, dass die Zwischenplatte (5) die Impulsladungsventile (3) mit ihren Aktuatoren in den Saugrohrabschnitten (10) des zweiten Saugrohrkörpers (2) hält.

2. Luftansaugmodul nach Anspruch 1, **dadurch gekennzeichnet, dass** die Impulsladungsventile (3) als Tellerventile ausgebildet sind.

3. Luftansaugmodul nach Anspruch 2, **dadurch gekennzeichnet , dass** die Aktuatoren der Impulsladungsventile (3) aus Elektromagneten bestehen.

4. Luftansaugmodul nach einem der vorhergehenden Ansprüche, **dadurch gekennzeichnet , dass** jedes Impulsladungsventil (3) mit dem zugehörigen Aktuator eine Baueinheit bildet, die bei der Montage des Luftansaugmoduls jeweils in den entsprechend gestalteten zugehörigen Saugrohrabschnitt (10) des zweiten Saugrohrkörpers (2) einsteckbar ist.

5. Luftansaugmodul nach einem der vorhergehenden Ansprüche, **dadurch gekennzeichnet , dass** die Zwischenplatte (5) durch Schraubverbindungen (12) am ersten Saugrohrkörper (1) befestigbar ist.

6. Luftansaugmodul nach einem der vorhergehenden Ansprüche, **dadurch gekennzeichnet, dass** der zweite Saugrohrkörper (2) aus einem metallischen Werkstoff oder Kunststoff besteht.

7. Luftansaugmodul nach einem der vorhergehenden Ansprüche, **dadurch gekennzeichnet, dass** der erste Saugrohrkörper (1) aus einem metallischen Werkstoff oder Kunststoff besteht.

8. Luftansaugmodul nach einem der vorhergehenden Ansprüche mit einem elektronischen Steuergerät (13) zum Ansteuern der Aktuatoren der Impulsladungsventile (3), **dadurch gekennzeichnet , dass** das elektronische Steuergerät (13) an einem Luftfiltergehäuse (7) der Brennkraftmaschine oder am ersten Saugrohrkörper (1) oder zweiten Saugrohrkörper (2) so befestigbar ist, dass es von durch das Luftansaugmodul strömender frischer Luft gekühlt wird.

9. Luftansaugmodul nach Anspruch 8 mit einem elektronischen Anschlussteil zur Leitungsverbindung zwischen den Aktuatoren der Impulsladungsventile (3) und dem elektronischen Steuergerät (13), **dadurch gekennzeichnet, dass** das elektronische Anschlussteil in den zweiten Saugrohrkörper (2) integriert ist.

10. Luftansaugmodul nach Anspruch 9, bei dem der zweite Saugrohrkörper (2) aus Kunststoff besteht, **dadurch ge kennzeichnet** , dass das elektronische Anschlussteil von dem Kunststoff des zweiten Saugrohrkörpers (2) umgossen ist und durch eine Steckverbindung mit den Aktuatoren der Impulsladungsventile (3) elektrisch verbindbar ist.

11. Luftansaugmodul nach einem der vorhergehenden Ansprüche mit einem Luftfiltergehäuse (7), **dadurch gekennzeichnet , dass** das Luftfiltergehäuse (7) am ersten Saugrohrkörper (1) oder am zweiten Saugrohrkörper (2) befestigbar ist.

12. Luftansaugmodul nach einem der vorhergehenden Ansprüche, **dadurch gekennzeichnet , dass** am Sammler (8) des ersten Saugrohrkörpers (1) eine Drosselklappe (6) befestigbar ist.

## Claims

1. Air induction module for a multi-cylinder combustion engine having pulse charging,
- with an induction pipe with individual induction pipes depending on the number of cylinders of the combustion engine, which induction pipe comprises:
- a first one-piece induction pipe body (1) with an air collector (8) and individual induction pipe sections (9) and
- a second one-piece induction pipe body (2) with individual induction pipe sections (10) which can be attached to the cylinder head of the combustion engine,
- whereby the first and second induction pipe bodies (1, 2) are connected to one another by a flanged joint (4), such that their induction pipe sections (9, 10) together form the individual induction pipes of the induction pipe,
- one respective pulse charging valve (3) is arranged with an associated actuator in the induction pipe sections (10) of the second induction pipe body (2), and
- the flanged joint (4) between the two induction pipe bodies (1, 2) comprises an intermediate plate (5) with through holes corresponding to the individual induction pipes which can be attached to the second induction pipe body (2) by screw connections (11) such that the intermediate plate (5) holds the pulse charging valves (3) with their actuators in the induction pipe sections (10) of the second induction pipe body (2).

2. Air induction module according to claim 1, **characterized in that** the pulse charging valves (3) are configured as poppet valves.

3. Air induction module according to claim 2, **characterized in that** the actuators of the induction pipe valves (3) consist of solenoids.

4. Air induction module according to any one of the preceding claims, **characterized in that** each pulse charging valve (3) with the associated actuator forms a component part which during assembly of the air induction module can be respectively inserted in the correspondingly formed associated induction pipe section (10) of the second induction pipe body (2).

5. Air induction module according to any one of the preceding claims, **characterized in that** the intermediate plate (5) can be attached to the first induction pipe body (1) by screw connections (12).

6. Air induction module according to any one of the preceding claims, **characterized in that** the second induction pipe body (2) consists of a metal material or plastics.

7. Air induction module according to any one of the preceding claims, **characterized in that** the first induction pipe body (1) consists of a metal material or plastics.

8. Air induction module according to any one of the preceding claims with an electronic control device (13) for controlling the actuators of the pulse charging valves (3) **characterized in that** the electronic control device (13) can be attached to an air filter housing (7) of the combustion engine or to the first induction pipe body (1) or second induction pipe body (2) such that it is cooled by the fresh air flowing through the air induction module.

9. Air induction module according to claim 8 with an electronic connector for the line connection between the actuators of the pulse charging valves (3) and the electronic control device (13), **characterized in that** the electronic connector is integrated in the second induction pipe body (2).

10. Air induction module according to claim 9, in which the second induction pipe body (2) consists of plastics material, **characterized in that** the plastics material of the second induction pipe body is cast around the electronic connector, which can be electrically connected by a plug connection to the actuators of the pulse charging valves (3).

11. Air induction module according to any one of the preceding claims with an air filter housing (7), **characterized in that** the air filter housing (7) can be attached to the first induction pipe body (1) or to the second induction pipe body (2).

12. Air induction module according to any one of the preceding claims, **characterized in that** a throttle valve (6) can be attached to the collector (8) of the first induction pipe body (1).

## Revendications

1. Module d'aspiration d'air pour un moteur à combustion interne à plusieurs cylindres à suralimentation par impulsions,
- comprenant une tubulure d'admission avec des tubulures individuelles en fonction du nombre de cylindres du moteur à combustion interne, laquelle tubulure d'admission présente :
- un premier corps de tubulure d'admission (1) d'une seule pièce avec un collecteur d'air (8) et des sections de tubulure individuelles (9) et
- un second corps de tubulure d'admission (2) d'une seule pièce avec des sections de tubulure individuelles (10), qui peut être fixé sur la culasse du moteur à combustion interne,
- le premier et le second corps de tubulure d'admission (1, 2) étant assemblés entre eux par un assemblage par brides (4) de sorte que leurs sections de tubulure d'admission (9, 10) se complètent pour former des tubulures individuelles de la tubulure d'admission,
- une soupape de suralimentation par impulsions (3) avec actuateur correspondant étant disposée dans chacune des sections de tubulure (10) du second corps de tubulure d'admission (2), et
- l'assemblage par brides (4) entre les deux corps de tubulure d'admission (1, 2) présentant une plaque intermédiaire (5) avec des trous de passage correspondant aux tubulures d'admission individuelles, lesquelles peuvent être fixées par des vissages (11) sur le second corps de tubulure d'admission (2) de sorte que la plaque intermédiaire (5) maintient les soupapes de suralimentation par impulsions (3) avec leurs actuateurs dans les sections de tubulure (10) du second corps de tubulure d'admission (2).

2. Module d'aspiration d'air suivant la revendication 1, **caractérisé en ce que** les soupapes de suralimentation par impulsions (3) sont réalisées sous forme de soupapes en champignon.

3. Module d'aspiration d'air suivant la revendication 2, **caractérisé en ce que** les actuateurs des soupapes de suralimentation par impulsions (3) sont constitués d'électro-aimants.

4. Module d'aspiration d'air suivant l'une des revendications précédentes, **caractérisé en ce que** chaque soupape de suralimentation par impulsions (3) avec l'actuateur correspondant forme une unité de montage, qui peut être emboîtée respectivement, lors du montage du module d'aspiration d'air, dans la section de tubulure (10) configurée en conséquence du second corps de tubulure d'admission (2).

5. Module d'aspiration d' air suivant l'une des revendications précédentes **caractérisé en ce que** la plaque intermédiaire (5) peut être fixée par des vissages (12) sur le premier corps de tubulure d'admission (1).

6. Module d'aspiration d'air suivant l'une des revendications précédentes, **caractérisé en ce que** le second corps de tubulure d'admission (2) se compose d'un matériau métallique ou de matière plastique.

7. Module d'aspiration d'air suivant l'une des revendications précédentes, **caractérisé en ce que** le premier corps de tubulure d'admission (1) se compose d'un matériau métallique ou de matière plastique.

8. Module d'aspiration d'air suivant l'une des revendications précédentes, comprenant un appareil de commande électronique (13) pour commander les actuateurs des soupapes de suralimentation par impulsions (3), **caractérisé en ce que** l'appareil de commande électronique (13) peut être fixé sur un boîtier de filtre à air (7) du moteur à combustion interne ou sur le premier corps de tubulure d'admission (1) ou sur le second corps de tubulure d'admission (2) de sorte qu'il est refroidi par l'air frais d'écoulant au travers du module d'aspiration d'air.

9. Module d'aspiration d'air suivant la revendication 8, comprenant un élément de raccordement pour la connexion entre les actuateurs des soupapes de suralimentation par impulsions (3) et l'appareil de commande électronique (13), **caractérisé en ce que** l'élément de raccordement électronique est intégré dans le second corps de tubulure d'admission (2).

10. Module d'aspiration d'air suivant la revendication 9, dans lequel le second corps de tubulure d'admission (2) se compose de matière plastique, **caractérisé en ce que** l'élément de raccordement électronique est moulé par la matière plastique du second corps de tubulure d'admission (2) et peut être mis en liaison électrique par un assemblage par emboîtement avec les actuateurs des soupapes de suralimentation par impulsions (3).

11. Module d'aspiration d'air suivant l'une des revendications précédentes, comprenant un boîtier de filtre à air (7), **caractérisé en ce que** le boîtier de filtre à air (7) peut être fixé sur le premier corps de tubulure d'admission (1) ou sur le second corps de tubulure d'admission (2).

12. Module d'aspiration d'air suivant l'une des revendications précédentes, **caractérisé en ce qu'**un clapet d'étranglement (6) peut être fixé sur le collecteur (8) du premier corps de tubulure d'admission (1).
